# EUROPEAN PATENT SPECIFICATION

(11) **EP 0 392 785 B1**
(45) Date of publication and mention of the grant of the patent: **03.08.1994**
(21) Application number: 90303801.6
(22) Date of filing: 09.04.1990
(51) Int. Cl.: B64D 31/02

(54) **Acceleration-sensitive friction device**
Beschleunigungssensitive Reibvorrichtung
Dispositif à friction sensible à l'accélération

(30) Priority: 10.04.1989 GB 8908012
(43) Date of publication of application: 17.10.1990
(73) Proprietor: BRITISH AEROSPACE PUBLIC LIMITED COMPANY, Farnborough, Hants. GU14 6YU (GB)
(72) Inventor: Kaye, Arthur, Preston, Lancashire, PR4 1AX (GB)
(74) Representative: Gold, Tibor Z.

(56) References cited:
- FR-A- 2 222 572
- GB-A- 2 073 887
- US-A- 1 378 824
- US-A- 4 477 043

## Description

This invention concerns an acceleration-sensitive friction device for damping undesired acceleration-induced movement of a control member. Although it is not so restricted, the invention will hereafter be described with reference to a useful application thereof wherein the control member is a throttle lever or a throttle lever box of a rectilinearly activated aircraft throttle and a pendulum forming part of the device is mounted for oscillation about a horizontal axis so as to be sensitive to fore-and-aft accelerations.

A problem with existing aircraft throttle control levers is that they may be moved unintentionally by high 'g' forces.

US-A-1 378 824 discloses a device for controlling the stabilising arrangement of a flying machine, in which a pendulum connected to the stabilising arrangement includes an elongate link with a bearing plate at a lower end and a rod with a bearing cap at an upper end arranged such that the plate normally bears on the cap, and a brake element is provided for retarding the movement of the pendulum when the link and the rod are thrown out of alignment and the plate is at least partially lifted from the cap.

The present invention seeks to overcome this problem by the provision of a relatively simple device which may be retrofitted to existing aircraft or incorporated into new aircraft and which is effective to reduce or prevent undesired or uncommanded movement of e.g. linear throttle control levers of military aircraft subject to high fore-and-aft accelerations.

The present invention provides an acceleration-sensitive friction device for damping undesired acceleration-induced movements of a control member, comprising a fixed first member having a friction surface, a second member movable with respect to said first member and comprising a pendulum adapted to oscillate in a bearing about an axis so as to be bi-directionally sensitive to longitudinal g-forces, characterised by said bearing having, or being connected to, a part displaceable as a function of the amplitude of pendulum movement, and at least two braking members connected to said displaceable part and disposed on opposite sides of the said axis in proximity of the friction surface for frictionally engaging therewith such that in use an increase in said amplitude is effective to vary the displacement of the said part and to apply a functionally related increase in the frictional pressure, in either direction, of the respective braking member on said friction surface.

There may be a resilient connection provided between said displaceable part and said braking member(s), which connection or spring is expediently adjusted to provide a preset force of frictional engagement of the brake members in the absence of any acceleration.

Optionally, said resilient connection or spring is adjusted to provide a preset force of frictional engagement of the brake members in the absence of any acceleration.

Preferably, said pendulum is constituted by a first pair of levers engaging weight means adjacent one end and being pivotally connected adjacent the other end to said brake members, a second pair of levers pivotally connected at one end thereof to said first pair of levers intermediate the said ends of the latter, optionally the other ends of said second pair bearing against an adjustably biased spring carried on a boss which in turn is pivotally connected to said second pair of levers intermediate the ends of the latter and which includes a mounting pivot for the said device, the arrangement of said pairs of levers being symmetrical about a plane passing through said mounting pivot parallel to the axes of oscillation of the levers of said first pair.

Preferably, said first pair of levers engage in recesses in a housing constituting a pendulum weight.

The first pair of levers may each carry a weight adjacent one end.

The weights may face each other with a predetermined-sized gap therebetween into which then, preferably, extends a pillar connected to said boss so as to limit acceleration-induced angular movement towards said plane of one of the levers of said first pair.

In an expedient embodiment, said control member is a throttle lever or a throttle lever box of a rectilinearly activated aircraft throttle and said pendulum is mounted for oscillation about a horizontal axis so as to be sensitive to fore-and-aft accelerations.

Optionally, the control member is mounted on a supporting structure that includes a wheeled carriage mobile on rails.

Preferred embodiments of the invention will now be described, purely by way of example, with reference to the accompanying diagrammatic drawings, wherein:
Figure 1 is a plan view of a device according to a first embodiment of the invention;
Figure 2 is an end elevation of the device of Figure 1;
Figure 3 is a cross-section of the device of Figure 1, taken in the direction of the arrow 'A' in the latter;
Figure 4 is a side elevation of a second preferred embodiment of a device according to the invention;
Figure 5 is an end elevation of the device shown in Figure 4;
Figure 6 is a plan view on arrow 'B' of Figure 4;
Figure 7 is a side elevation of a device according to a third embodiment of the invention, and
Figure 8 is partly an end elevation of the device according to Figure 7 and partly a cross-section taken along the line C-C in Figure 7.

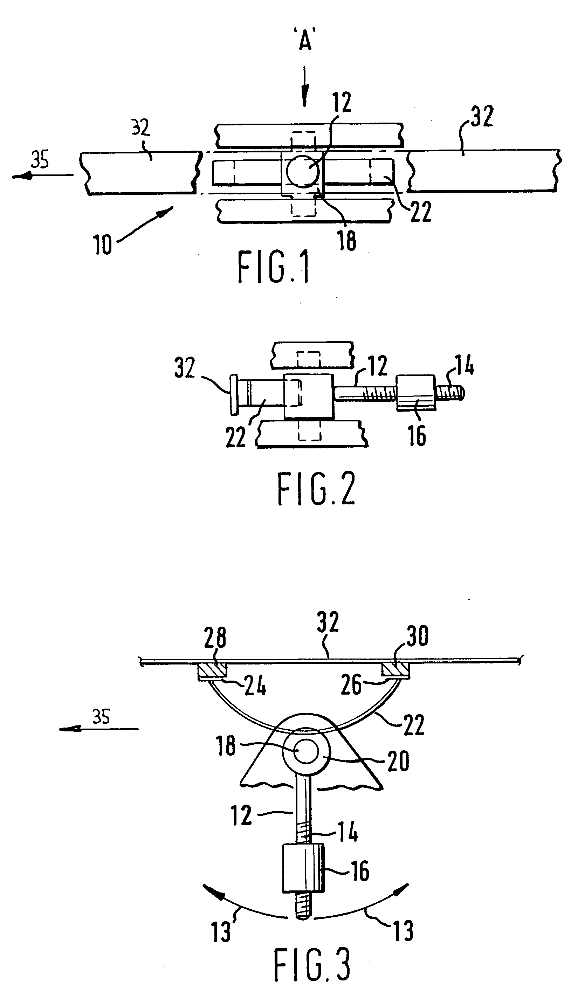

Referring first to the embodiment of Figures 1 to 3, the device 10 comprises a pendulum 12 mounted for oscillation about a horizontal axis. It has a threaded stem 14 carrying a weight 16 adjustable along its length to balance the different masses of control handles (not shown) that may occur in practice.

The pendulum 12 is arrange to oscillate along the directions shown by curved arrows 13 on a suitable bush bearing assembly 18 having an outer, displaceable bearing part 20 which is fixed to a spring 22, made for example of beryllium copper for strength. The two ends 24, 26 of the spring 22 are secured to respective friction pads 28, 30. These friction pads 28, 30 constitute brake shoes that bear against a rubbing strip 32 on the side of a throttle box (not shown) with a certain bias or pre-load. This bias allows a certain basic friction 'feel' to the handle (not shown) when operated by a pilot and also provides sufficient hold of the handle to allow the pendulum acceleration under gravity ('g') to be greater than the 'g' acceleration of the handle. Movement of the pendulum 12 results in rotation of the part 20 of the bearing assembly and causes increased pressure on that one of the friction pads 28,30 which is the leading shoe in whichever longitudinal direction the 'g' force is acting. The forward direction is indicated by arrow 35 in Figures 1 and 3.

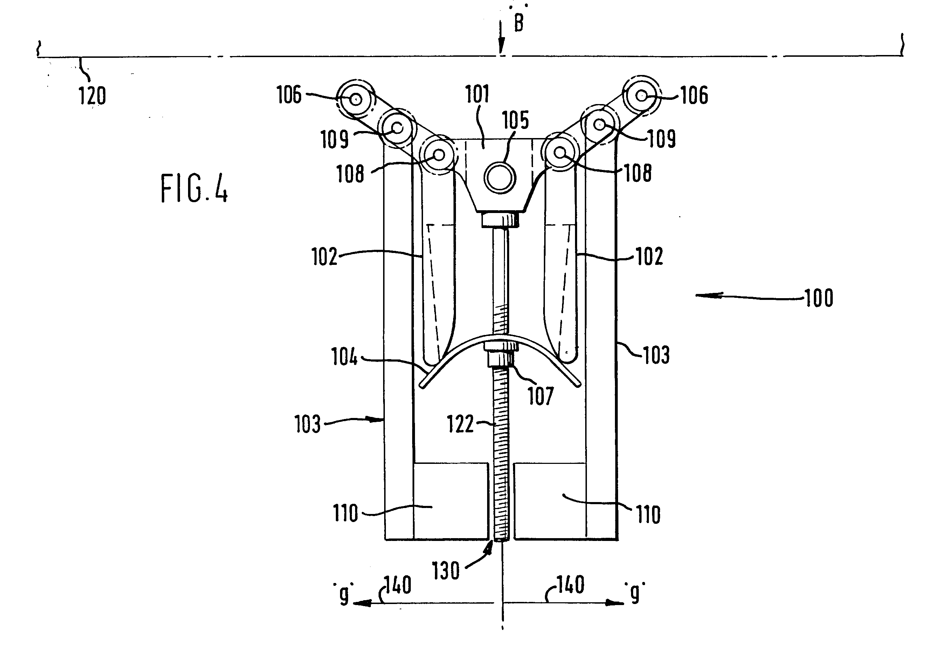

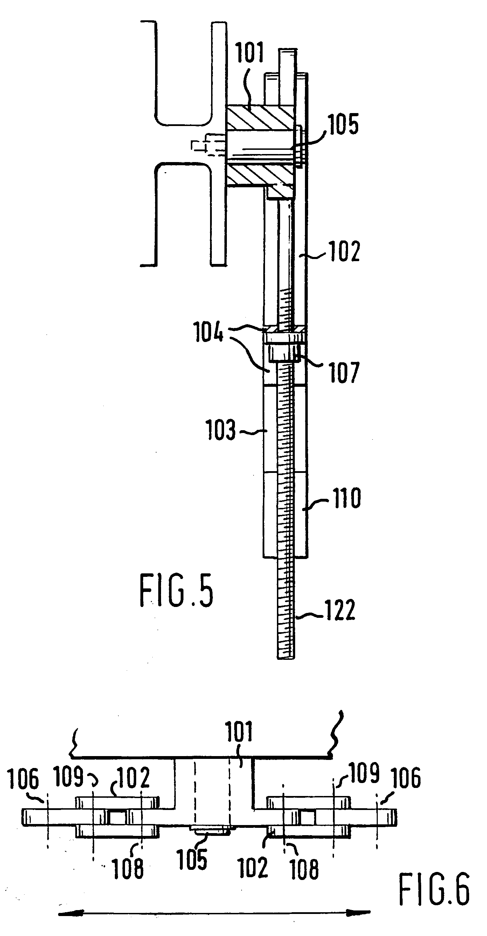

Referring now to Figures 4 to 6 illustrating a more highly-developed embodiment of the invention, the 'g'-proportioned friction device 100 shown therein is mounted on a pivot 105 by way of a boss 101. This mode of mounting allows some angular movement about that point to ensure an even distribution of pressure on the two brake shoes (not shown) which are mounted on pivots 106. In operation, the brake shoes travel in a linear manner along a friction surface 120 when commanded to do so.

Basic friction is applied and adjusted by means of a nut 107 acting on a (preferably beryllium copper) spring 104. Screwing the nut 107 along its threaded pillar 122 towards pivot 105 increases basic friction and away from pivot 105 reduces it.

To increase basic friction, the bias of the spring 104 on a respective pair of levers 102 pivotally connected to each side of the boss 101 on pivot points 108 and arranged to terminate at further pivot points 109 causes them to rotate a slightly about pivot points 108 thus causing further pivot points 109 to be moved nearer to the friction surface 120. Levers 103, being pivoted to the levers 102 at pivot points 109, are also moved closer to the friction surface 120. As these levers 103 carry the non-illustrated brake shoes pivoted at points 106, it follows that pressure on the brake shoes will increase, consequently increasing the basic friction.

The application of longitudinal 'g' along the path of normal travel indicated by arrows 140 would cause uncommanded movement to whatever the device 100 is attached. To prevent this, the preset basic friction causes sufficient delay to enable the levers 103 to pivot about pivot points 109 under the influence of weights 110, thus increasing the force on the leading shoe in proportion to the 'g' applied.

The pillar 122 of boss 101 to which the nut 107 is attached is carried through to extend into the gap 130 between the mutually facing weights 110, in order to prevent the lever 103 supporting the trailing shoe from pivoting beyond the vertical: to allow it to do so would undesirably remove the basic friction from this trailing shoe.

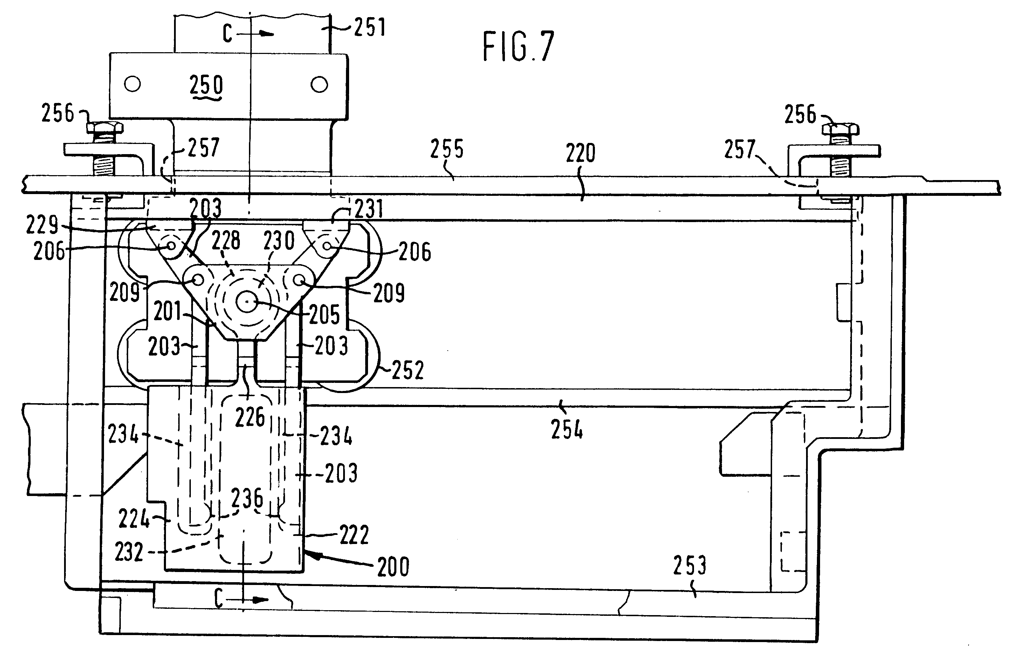

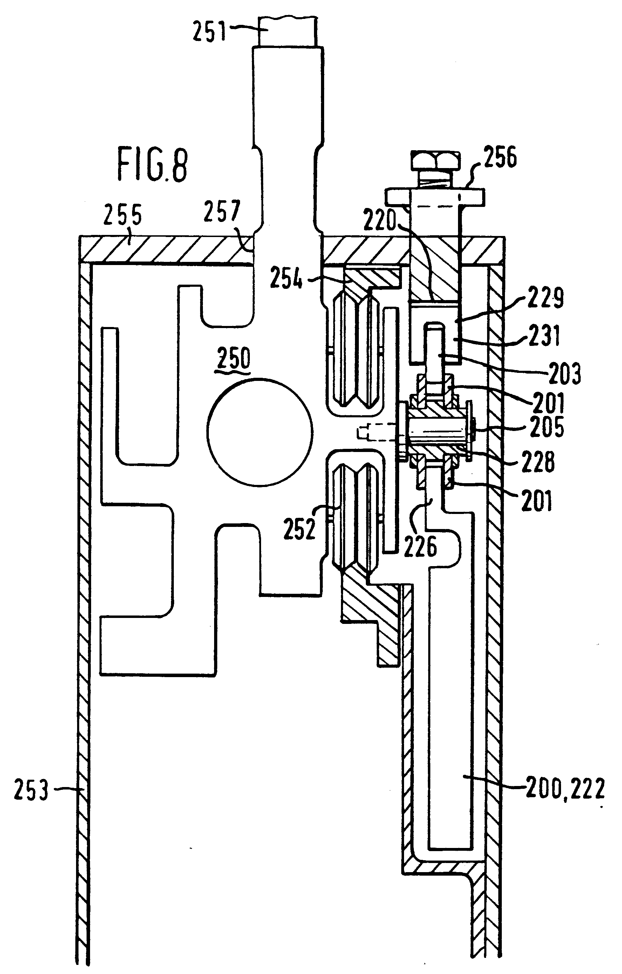

Turning now to the embodiment illustrated in Figures 7 and 8, wherein parts functionally similar to those of the embodiment illustrated in Figures 4 to 6 have been allotted reference numbers increased by 100, the 'g'-proportioned friction device 200 includes a horizontally mounted pendulum 222 having a main body portion 224, a neck 226 and a journal bearing 228. The bearing 228 surrounds an eccentric, internally splined bush 230 journalling a splined pin 205. The splined interconnection between the parts 205, 230 is for enabling the height of the pendulum to be adjusted.

The body portion 224 is hollow and its cavity is filled with a lead insert 232 to increase its mass. On either side of the lead insert 232 a respective recess 234 in the body portion 224 accommodates a lever 203. The free end portion of each lever 203 is formed with a nose 236 for frictional engagement with a wall of the respective recess 234.

Each lever 203 is pivotally connected by way of lever pivot pins 209 to two corners of a generally inverted triangular-section boss or plate 201 which surrounds the bearing arrangement 228, 230 and 205 of the pendulum. From pins 209 a further portion of each lever 203 extends at an angle and terminates in a pivotal connection 206 to friction pads 229, 231 bearing against a braking surface 220.

The bearing arrangement is connected to a carriage structure 250 that is housed within a throttle box 253 and that supports a throttle lever 251. This structure 250 runs on wheels 252 rolling on rails 254. The rails 254 and the braking surface 220 may be levelled by adjustable bolts 256.

In this embodiment, no spring like the spring 104 in Figures 4 to 6 is provided. However, in a non-illustrated variant, an unrolled coil spring may be secured at each end of and extending the full length of, the underside of the braking surface 220 and passed under the brake pads 229, 231 so as to exert a resilient force on the underside of the pads 229,231.

In use of the embodiment of Figures 7 and 8, longitudinal, fore-and-aft acceleration causes the pendulum to oscillate, in turn causing the levers 203 to move up-and-down in the recesses 234. This lever movement is transmitted via lever pivot pins 209 and pivotal connections 206 to cause the appropriate one of the pads 229, 231 to be pressed more strongly against the braking surface 220.

Although in the embodiments of Figures 4 to 6 and Figures 7 and 8 the levers 103, 203 and friction pads are disposed symmetrically about the axis of oscillation of the pendulum, in a non-illustrated variant one lever or brake may operate in one direction in a 'g'-proportioned way but in the opposite direction may operate in a manner which is not 'g'-proportioned.

## Claims

1. An acceleration-sensitive friction device (10; 100; 200) for damping undesired acceleration-induced movements of a control member comprising a fixed first member (253) having a friction surface (32, 120, 220), a second member (250) movable with respect to said first member (253) and comprising a pendulum (12; 103; 222) adapted to oscillate in a bearing about an axis (18; 109; 228) so as to be bi-directionally sensitive to longitudinal g-forces, characterised by said bearing (18; 109;228) having, or being connected to, a part (20; 203) displaceable as a function of the amplitude of pendulum movement, and at least two braking members (28; 30; 106; 229; 231) connected to said displaceable part (20; 203) and disposed on opposite sides of the said axis (18; 109; 228) in proximity of the friction surface (32; 120; 220) for frictionally engaging therewith such that in use an increase in said amplitude is effective to vary the displacement of the said part (20; 203) and to apply a functionally related increase in the frictional pressure, in either direction, of the respective braking member (28; 30; 106; 229; 231) on said friction surface (32; 220).

2. A friction device according to claim 1, characterised in that a resilient connection (22; 104) is provided between said displaceable part (20) and said braking members (28; 30; 106).

3. A friction device according to claim 2, characterised in that adjustment means (107) acting on said resilient connection is effective to provide a preset force of frictional engagement of the braking members (106) in the absence of any acceleration.

4. A friction device according to any preceding claim, characterised in that said pendulum is constituted by a first pair of levers (103; 203) engaging weight means (110; 224,232) adjacent one end and being pivotally connected adjacent the other end to said brake members, a second pair of levers (102; 203) pivotally connected at one end thereof to said first pair of levers intermediate the said ends of the latter; optionally the other ends of said second pair bearing against an adjustably biased spring (104) carried on a boss (101;201) which in turn is pivotally connected to said second pair of levers intermediate the ends of the latter and which includes a mounting pivot (105;206) for the said device; the arrangement of said pairs of levers being symmetrical about a plane passing through said mounting pivot parallel to the axes of oscillation of the levers of said first pair.

5. A friction device according to claim 4, characterised in that said first pair of levers (203) engage in recesses (234) in a housing (224) constituting a pendulum weight.

6. A friction device according to claim 4, characterised in that said first pair of levers (103) each carry a weight (110) adjacent one end.

7. A friction device according to claim 6 , characterised in that said weights face each other with a predetermined gap (130) therebetween into which extends a pillar (122) connected to said boss (101) so as to limit acceleration-induced angular movement towards said plane of one of the levers of said first pair (103).

8. A friction device according to any preceding claim, characterised in said control member is a throttle lever or a throttle lever box of a rectilinearly activated aircraft throttle and said pendulum is mounted for oscillation about a horizontal axis so as to be sensitive to fore-and-aft accelerations.

9. A friction device according to claim 5 or any claim appendant thereto, characterised in that in the control member is mounted on a supporting structure that includes a wheeled carriage (250) mobile on rails (254).

## Patentansprüche

1. Beschleunigungssensitive Reibvorrichtung (10; 100; 200) zur Dämpfung unerwünschter, durch Beschleunigung eingeführter Bewegungen eines Steuerorgans, mit einem ersten festen Bauteil (253), welches eine Reibungsoberfläche (32, 120, 220) besitzt, mit einem zweiten Bauteil (250), welches gegenüber dem ersten Bauteil (253) beweglich ist und ein Pendel (12; 103; 222) aufweist, welches in einem Lager um eine Achse (18; 109; 228) derart schwingbar ist, daß es auf in Längsrichtung wirkende Beschleunigungskräfte in beiden Richtungen anspricht,
dadurch gekennzeichnet, daß das Lager (18; 109; 228) einen Teil (20; 203) aufweist oder mit einem solchen verbunden ist, der als Funktion der Amplitude der Pendelbewegung versetzbar ist, und daß wenigstens zwei Bremskörper (28; 30; 106; 229; 231) mit dem versetzbaren Teil (20; 203) verbunden und auf gegenüberliegenden Seiten der Achse (18; 109; 228) in der Nähe der Friktionsoberfläche (32; 120; 220) angeordnet sind, um mit dieser reibungsschlüssig derart zusammenzuwirken, daß im Betrieb eine Erhöhung der Amplitude die Versetzung des Teils (20; 203) ändert und eine funktionell abhängige Erhöhung im Reibungsdruck in beiden Richtungen der jeweiligen Bremskörper (28; 30; 106; 229; 231) auf die Reibungsoberfläche (32; 220) ausübt.

2. Reibvorrichtung nach Anspruch 1,
dadurch gekennzeichnet, daß eine elastische Verbindung (22; 104) zwischen dem versetzbaren Teil (20) und den Bremskörpern (28; 30; 106) vorgesehen ist.

3. Reibvorrichtung nach Anspruch 2,
dadurch gekennzeichnet, daß Einstellmittel (107), die auf die elastische Verbindung einwirken, eine voreinstellbare Kraft für den Reibungseingriff des Bremskörpers (106) beim Fehlen jeglicher Beschleunigung liefern.

4. Reibvorrichtung nach einem der vorhergehenden Ansprüche,
dadurch gekennzeichnet, daß das Pendel durch ein erstes Hebelpaar (103; 203) gebildet ist, an dem Gewichte (110; 224, 232) benachbart zu einem Ende angreiften und das schwenkbar am anderen Ende mit den Bremskörpern verbunden ist, daß ein zweites Hebelpaar (102; 202) schwenkbar an einem Ende mit dem ersten Hebelpaar zwischen den Enden des letzteren angelenkt ist, daß fakultativ das andere Ende des zweiten Hebelpaares gegen eine einstellbare Vorspannfeder (104) lagert, die von einer Nabe (101; 201) getragen wird, die ihrerseits schwenkbar an dem zweiten Hebelpaar zwischen dessen Enden angelenkt ist und die einen Schwenkzapfen (105; 206) für diese Vorrichtung aufweist, und daß die Anordnung der Hebelpaare symmetrisch zu einer Ebene ist, die durch den Schwenkzapfen und parallel zu den Schwingungsachsen der Hebel des ersten Paares verläuft.

5. Reibvorrichtung nach Anspruch 4,
dadurch gekennzeichnet, daß das erste Hebelpaar (203) in Ausnehmungen (234) im Gehäuse (224) angreift, das ein Pendelgewicht bildet.

6. Reibvorrichtung nach Anspruch 4,
dadurch gekennzeichnet, daß das erste Hebelpaar (103) jeweils ein Gewicht (110) benachbart zu einem Ende trägt.

7. Reibvorrichtung nach Anspruch 6,
dadurch gekennzeichnet, daß die Gewichte einander unter Belassung eines vorbestimmten Abstandes (130) dazwischen gegenüberliegen und daß in den Zwischenraum eine Spindel (122) einsteht, die mit der Nabe (101) verbunden ist, so daß die durch die Beschleunigung induzierte Winkelbewegung nach der Ebene eines der Hebel des ersten Hebelpaares (103) begrenzt wird.

8. Reibvorrichtung nach einem der vorhergehenden Ansprüche,
dadurch gekennzeichnet, daß das Steuerorgan der Gashebel oder die Gashebelbox eines geradlinig aktivierten Flugzeuggashebels ist und daß das Pendel schwingbar um eine Horizontalachse derart aufgehängt ist, daß es auf Beschleunigungen in Vorwärts- und Rückwärtsrichtung anspricht.

9. Reibvorrichtung nach Anspruch 5 oder einem hiervon abhängigen Anspruch,
dadurch gekennzeichnet, daß das Steuerorgan auf einem Trägeraufbau montiert ist, der einen mit Rädern versehenen Schlitten (250) aufweist, welcher auf Schienen (254) läuft.

## Revendications

1. Dispositif à friction sensible à l'accélération (10; 100; 200) pour amortir les mouvements indésirés, induits par l'accélération d'un élément de commande, comprenant un premier élément fixe (235) ayant une surface à friction (32, 120, 220), un second élément (250) mobile par rapport audit premier élément (253) et comprenant un pendule (12; 103; 222) destiné à osciller dans un roulement autour d'un axe (18; 109; 222) de manière à être sensible bidirectionnellement aux forces g longitudinales, caractérisé en ce que ledit roulement (18; 109; 228) a, ou est connecté à, une partie (20; 203) pouvant se déplacer en fonction de l'amplitude du mouvement du pendule, et au moins deux éléments de freinage (28; 30; 106; 229; 231) connectés à ladite partie pouvant se déplacer (20; 203) et disposés sur les côtés opposés dudit axe (18; 109; 228) à proximité de la surface à friction (32; 120; 220) pour être en contact par friction avec elle d'une manière telle que pendant l'utilisation une augmentation de ladite amplitude permet de faire varier le déplacement de ladite partie (20; 203) et d'appliquer une augmentation liée fonctionnellement de la pression de friction, dans l'une et l'autre direction, de l'élément de freinage respectif (28; 30; 106; 229; 231) agissant sur ladite surface à friction (32; 220).

2. Dispositif à friction selon la revendication 1, caractérisé en ce qu'une connexion élastique (22; 104) est prévue entre ladite partie pouvant se déplacer (20) et lesdits éléments de freinage (28; 30; 106).

3. Dispositif à friction selon la revendication 2, caractérisé en ce qu'un moyen de réglage (107) agissant sur ladite connexion élastique permet de fournir une force pré-réglée du contact par friction des éléments de freinage (106) en l'absence de toute accélération.

4. Dispositif à friction selon l'une quelconque des revendications précédentes, caractérisé en ce que ledit pendule est constitué d'une première paire de leviers (103; 203) en contact avec un moyen de poids (110; 224, 232) contigu à une extrémité et relié par pivotement dans le voisinage de l'autre extrémité auxdits éléments de frein, une seconde paire de leviers (102; 203) connectés en pivotement à l'une de leurs extrémités à ladite première paire de leviers entre lesdites extrémités de cette dernière; en option, les autres extrémités de ladite seconde paire appuyant sur un ressort sollicité de façon réglable (104) porté par un bossage (101; 201) qui est à son tour relié en pivotement à ladite seconde paire de leviers entre les extrémités de cette dernière et qui comprend un pivot de monture (105; 206) pour ledit dispositif; l'agencement desdites paires de leviers étant symétrique par rapport à un plan passant par ledit pivot de monture parallèle aux axes d'oscillation des leviers de ladite première paire.

5. Dispositif à friction selon la revendication 4, caractérisé en ce que ladite première paire de leviers (203) s'engage dans des évidements (234) ménagés dans un logement (224) constituant un poids du pendule.

6. Dispositif à friction selon la revendication 4, caractérisé en ce que chaque levier de ladite première paire de leviers (103) supporte un poids (110) dans le voisinage d'une extrémité.

7. Dispositif à friction selon la revendication 6, caractérisé en ce que lesdits poids sont en regard l'un de l'autre avec un intervalle prédéterminé (130) les séparant, dans lequel s'étend un pilier (122) connecté audit bossage (101) de manière à limiter le mouvement angulaire induit par l'accélération vers ledit plan de l'un des leviers de ladite première paire (103).

8. Dispositif à friction selon l'une quelconque des revendications précédentes, caractérisé en ce que ledit élément de commande est un levier de papillon ou une boîte à levier de papillon d'un papillon d'avion actionné rectilinéairement et ledit pendule est monté pour osciller autour d'un axe horizontal de manière à être sensible aux accélérations avant et arrière.

9. Dispositif à friction selon la revendication 5, ou l'une quelconque des revendications dépendantes de celle-ci, caractérisé en ce que l'élément de commande est monté sur une structure de support qui incorpore un chariot à roues (250) mobile sur des rails (254).
